(19) **Europäisches Patentamt European Patent Office Office européen des brevets**

(11) **EP 4 596 093 A1**

(12) **EUROPEAN PATENT APPLICATION**
published in accordance with Art. 153(4) EPC

(43) Date of publication:
06.08.2025 Bulletin 2025/32

(21) Application number: 23871810.0

(22) Date of filing: 07.09.2023

(51) International Patent Classification (IPC):
$B01D\ 65/10^{(2006.01)}$   $B01D\ 69/02^{(2006.01)}$
$B01D\ 69/12^{(2006.01)}$   $B01D\ 71/02^{(2006.01)}$
$B01D\ 71/70^{(2006.01)}$

(52) Cooperative Patent Classification (CPC):
B01D 65/10; B01D 69/02; B01D 69/12;
B01D 71/02; B01D 71/70

(86) International application number:
PCT/JP2023/032764

(87) International publication number:
WO 2024/070573 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.09.2022 JP 2022153130
08.03.2023 JP 2023035969

(71) Applicant: NITTO DENKO CORPORATION
Ibaraki-shi
Osaka 567-8680 (JP)

(72) Inventors:
• YANO, Hikaru
  Ibaraki-shi, Osaka 567-8680 (JP)
• NAKANO, Takeshi
  Ibaraki-shi, Osaka 567-8680 (JP)
• OGAWA, Tomoya
  Ibaraki-shi, Osaka 567-8680 (JP)

(74) Representative: Hoffmann Eitle
Patent- und Rechtsanwälte PartmbB
Arabellastraße 30
81925 München (DE)

(54) **PERVAPORATION MEMBRANE**

(57)    The present invention provides a pervaporation membrane suitable for a long-term process for separating a volatile organic compound from an aqueous solution containing the organic compound. A pervaporation membrane 10A includes a separation functional layer 1 including a silicone resin. A ratio R of a value to a Young's modulus A1 (MPa) of the separation functional layer 1 before a test below is -30% or more, the value being determined by subtracting the Young's modulus A1 from a Young's modulus A2 (MPa) of the separation functional layer 1 after the test.

Test: The separation functional layer 1 is immersed in a liquid mixture L consisting of n-butanol and water for three weeks. The separation functional layer 1 is taken out of the liquid mixture L and dried. A content of n-butanol in the liquid mixture L is 1.0 wt%, and the liquid mixture L has a temperature of 80°C.

FIG.1

**Description**

TECHNICAL FIELD

The present invention relates to a pervaporation membrane.

BACKGROUND ART

A method using fermentation by a microorganism has been known as a method for obtaining a non-petroleum valuable substance. For example, there have been developed methods for producing a volatile organic compound (a fermented product), such as an alcohol, by fermenting a carbon source, such as glucose, by using a microorganism. The fermentation of a carbon source is carried out, for example, in an aqueous solution. In this method, the fermentation by a microorganism stops in some cases when the content of the fermented product in the aqueous solution increases. For continuous production of the fermented product by a microorganism, the fermented product needs to be separated from the aqueous solution.

One example of the method for separating a volatile organic compound from an aqueous solution containing the organic compound is a pervaporation method using a pervaporation membrane. The pervaporation method is suitable for separating a volatile organic compound from an aqueous solution containing various substances. Moreover, the pervaporation method tends to be able to reduce energy consumption and carbon dioxide emissions compared to a distillation method. The material of the pervaporation membrane used in the pervaporation method is specifically, for example, a silicone resin (e.g., Patent Literature 1).

CITATION LIST

Patent Literature

Patent Literature 1: JP 4899122 B2

SUMMARY OF INVENTION

Technical Problem

According to studies by the present inventors, conventional pervaporation membranes including a silicone resin are prone to be deteriorated by a long-term process for separating a volatile organic compound from an aqueous solution containing the organic compound. It is considered that the deterioration of the pervaporation membranes is attributable to hydrolysis of the silicone resin. Deterioration of a pervaporation membrane tends to result in formation of a crack in the pervaporation membrane and a great decrease in separation performance of the pervaporation membrane. Formation of cracks is remarkable particularly in a pervaporation membrane including a filler.

Therefore, the present invention aims to provide a pervaporation membrane suitable for a long-term process for separating a volatile organic compound from an aqueous solution containing the organic compound.

Solution to Problem

As a result of intensive studies, the present inventors have newly found that a Young's modulus of a separation functional layer included in a pervaporation membrane can be employed as a measure of deterioration, and have completed the present invention.

The present invention provides a pervaporation membrane including a separation functional layer including a silicone resin, wherein

a ratio R of a value to a Young's modulus $A_1$ (MPa) of the separation functional layer before a test below is -30% or more, the value being determined by subtracting the Young's modulus $A_1$ from a Young's modulus $A_2$ (MPa) of the separation functional layer after the test.

Test: The separation functional layer is immersed in a liquid mixture consisting of n-butanol and water for three weeks. The separation functional layer is taken out of the liquid mixture and dried. A content of n-butanol in the liquid mixture is 1.0 wt%, and the liquid mixture has a temperature of 80°C.

The present invention also provides a pervaporation membrane including a separation functional layer including a silicone resin, wherein

a content of tin in the separation functional layer is 1100 wt ppm or less.

Advantageous Effects of Invention

According to the present invention, a pervaporation membrane suitable for a long-term process for separating a volatile organic compound from an aqueous solution containing the organic compound can be provided.

BRIEF DESCRIPTION OF DRAWINGS

FIG. 1 is a cross-sectional view schematically showing a pervaporation membrane of one embodiment of the present invention.
FIG. 2 is a schematic cross-sectional view showing a modification of the pervaporation membrane.
FIG. 3 is a schematic cross-sectional view showing a membrane separation device including a pervaporation membrane.
FIG. 4 is a perspective view schematically showing a modification of the membrane separation device.
FIG. 5 is a schematic configuration diagram showing an example of a membrane separation system.

DESCRIPTION OF EMBODIMENTS

A pervaporation membrane according to a first aspect of the present invention includes a separation functional layer including a silicone resin, wherein
a ratio R of a value to a Young's modulus A1 (MPa) of the separation functional layer before a test below is -30% or more, the value being determined by subtracting the Young's modulus A1 from a Young's modulus A2 (MPa) of the separation functional layer after the test.

Test: The separation functional layer is immersed in a liquid mixture consisting of n-butanol and water for three weeks. The separation functional layer is taken out of the liquid mixture and dried. A content of n-butanol in the liquid mixture is 1.0 wt%, and the liquid mixture has a temperature of 80°C.

According to a second aspect of the present invention, for example, in the pervaporation membrane according to the first aspect, the ratio R is 30% or less.

According to a third aspect of the present invention, for example, in the pervaporation membrane according to the first or second aspect, the Young's modulus A1 is 0.1 MPa or more.

According to a fourth aspect of the present invention, for example, in the pervaporation membrane according to any one of the first to third aspects, a content of tin in the separation functional layer is 1100 wt ppm or less.

A pervaporation membrane according to a fifth aspect of the present invention includes a separation functional layer including a silicone resin, wherein
a content of tin in the separation functional layer is 1100 wt ppm or less.

According to a sixth aspect of the present invention, for example, in the pervaporation membrane according to any one of the first to fifth aspects, the silicone resin is formed from an addition type silicone resin composition.

According to a sixth aspect of the present invention, for example, in the pervaporation membrane according to the sixth aspect, the addition type silicone resin composition includes a polyorganosiloxane P1 having an alkenyl group and a polyorganosiloxane P2 having a hydrosilyl group.

According to an eighth aspect of the present invention, for example, in the pervaporation membrane according to the sixth or seventh aspect, the addition type silicone resin composition includes a curing catalyst including platinum.

According to a ninth aspect of the present invention, for example, in the pervaporation membrane according to any one of the first to eighth aspects, the separation functional layer further includes a filler.

According to a tenth aspect of the present invention, for example, in the pervaporation membrane according to the ninth aspect, the filler includes at least one selected from the group consisting of zeolite and silica.

According to an eleventh aspect of the present invention, for example, in the pervaporation membrane according to the ninth or tenth aspect, the filler has a surface modified with a modifying group including a hydrocarbon group.

According to a twelfth aspect of the present invention, for example, in the pervaporation membrane according to the eleventh aspect, the modifying group includes at least one selected from the group consisting of an organosilyl group and a polyorganosiloxane group.

According to a thirteenth aspect of the present invention, for example, the pervaporation membrane according to any one of the first to twelfth aspects is configured to be used to separate a volatile organic compound from an aqueous solution containing the organic compound.

According to a fourteenth aspect of the present invention, for example, in the pervaporation membrane according to the thirteenth aspect, the organic compound is a fermented product generated by a microorganism.

The present invention will be described below in detail. The following description is not intended to limit the present invention to a specific embodiment.

<Embodiment of pervaporation membrane>

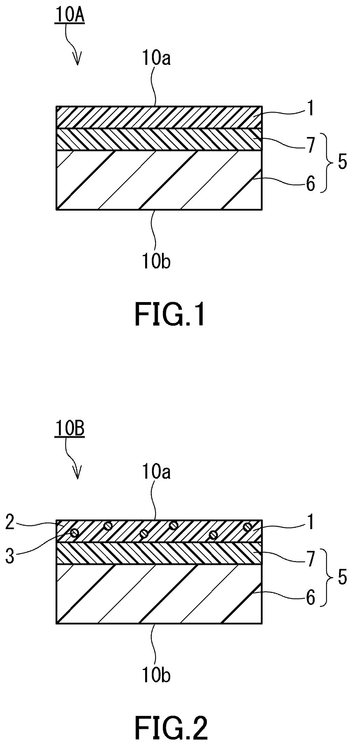

As shown in FIG. 1, a pervaporation membrane 10A of the present embodiment includes a separation functional layer 1 including a silicone resin. The pervaporation membrane 10A is typically a membrane (separation membrane) preferentially permeable to a volatile organic compound C in an aqueous solution S. The pervaporation membrane 10A may further include a porous support 5 supporting the separation functional layer 1. The separation functional layer 1 has, for example, a surface in direct contact with the porous support 5 and a surface exposed to the outside of the pervaporation membrane 10. The pervaporation membrane 10 is composed, for example, only of the separation functional layer 1 and the porous support 5.

(Separation functional layer)

The separation functional layer 1 is a layer, for example, preferentially permeable to the organic compound C in the above aqueous solution S, and is typically a dense layer (non-porous layer) in which no pores can be confirmed with a scanning electron microscope (SEM) at 5000-fold magnification.
In the present embodiment, a ratio R of a value to a Young's modulus A1 (MPa) of the separation functional layer 1 before Test 1 below is -30% or more, the value being determined by subtracting the Young's modulus A1 from a Young's modulus A2 (MPa) of the separation functional layer 1 after Test 1.
Test 1: The separation functional layer 1 is immersed in a liquid mixture L consisting of n-butanol and water for three weeks. The separation functional layer 1 is taken out of the liquid mixture L and dried. A content of n-butanol in the liquid mixture L is 1.0 wt%, and the liquid mixture L has a temperature of 80°C.
A ratio R can be calculated specifically by the following equation (1).

$$\text{Ratio } R\ (\%) = 100 \times (A2 - A1)/A1 \qquad (1)$$

According to studies by the present inventors, deterioration of the separation functional layer 1 having a ratio R of -30% or more tends to be reduced even after the separation functional layer 1 has been in contact with the aqueous solution S containing the volatile organic compound C for a long period of time. This tendency is attributable to, for example, inhibition of hydrolysis of the silicone resin included in the separation functional layer 1. Since deterioration of the separation functional layer 1 of the pervaporation membrane 10A of the present embodiment is reduced, it can be said that the pervaporation membrane 10A of the present embodiment is suitable for a long-term process for separating the volatile organic compound C from the aqueous solution S.
The ratio R is preferably -25% or more, and may be -20% or more, -15% or more, -10% or more, or even -5% or more in terms of further reducing deterioration of the separation functional layer 1. Note that in the case where a curing reaction of the silicone resin proceeds in the separation functional layer 1 during Test 1 above, the ratio R can become more than 0%. For the pervaporation membrane 10A, the upper limit of the ratio R is, for example, 50% or less, and is preferably 40% or less, 30% or less, 20% or less, or even 10% or less in terms of suppressing variations in separation properties during use so as to stabilize the quality. In particular, when the ratio R is 30% or less, peeling of the separation functional layer 1 due to curing shrinkage is likely to be sufficiently reduced during a long-term use of the pervaporation membrane 10A.
The Young's modulus A1 can be measured by the following method. First, the porous support 5 is removed from the pervaporation membrane 10A to produce a free-standing membrane (single-layer film) of the separation functional layer 1. The method for producing the free-standing membrane of the separation functional layer 1 is not limited to this method. For example, a layer having the same composition and the same thickness as those of the separation functional layer 1 included in the pervaporation membrane 10A is formed on a release liner, which is removed to give a free-standing membrane of the separation functional layer 1. The free-standing membrane of the separation functional layer 1 is subjected to a dry treatment, if necessary, to turn the free-standing membrane into a dry state. The "dry state" means a state where a content of a liquid, such as water, in the separation functional layer 1 is 0.5 wt% or less.
Then, the free-standing membrane of the separation functional layer 1 is cut to a 10 mm × 60 mm strip to give a test piece. The test piece is set on a commercially-available tensile tester, and a tensile test is performed under the following conditions.

•Measurement conditions

Temperature: 25°C
Tensile direction: the longitudinal direction of the test piece
Initial chuck-to-chuck distance: 20 mm
Tensile speed: 300 mm/min

Next, a stress-strain curve (S-S curve) is created on the basis of the tensile test result. A tangent touching the origin of the S-S curve is drawn. The Young's modulus A1 can be calculated from the gradient of the tangent.

The Young's modulus A1 is not limited to a particular value, and is, for example, 0.1 MPa or more, and may be 0.3 MPa or more, 0.5 MPa or more, 1.0 MPa or more, 3.0 MPa or more, 5.0 MPa or more, 8.0 MPa or more, or even 10.0 MPa or more. The upper limit of the Young's modulus A1 is not limited to a particular value, and is, for example, 50 MPa.

The Young's modulus A2 can be measured by the following method. First, a free-standing membrane of the separation functional layer 1 is produced by the above method. The free-standing membrane of the separation functional layer 1 is subjected to Test 1 above. Specifically, the separation functional layer 1 is immersed in the liquid mixture L at 80°C for three weeks. The separation functional layer 1 is taken out of the liquid mixture L and dried. Conditions for drying the separation functional layer 1 are not limited to particular conditions; for example, a drying temperature is in the range of 20°C to 60°C, and a drying time is in the range of 18 hours to 1 day. The separation functional layer 1 in the dry state is obtained in this manner.

Then, the free-standing membrane of the separation functional layer 1 is cut to a 10 mm × 60 mm strip to give a test piece. The test piece is set on a commercially-available tensile tester, and a tensile test is performed. The Young's modulus A2 can be calculated on the basis of the result. Conditions for the tensile test and the method for calculating the Young's modulus A2 are as described above for the Young's modulus A1.

The Young's modulus A2 is not limited to a particular value, and is, for example, 0.1 MPa or more, and may be 0.3 MPa or more, 0.5 MPa or more, 1.0 MPa or more, 3.0 MPa or more, 5.0 MPa or more, 8.0 MPa or more, or even 10.0 MPa or more. The upper limit of the Young's modulus A2 is not limited to a particular value, and is, for example, 50 MPa.

As described above, the separation functional layer 1 includes a silicone resin. The silicone resin is formed, for example, from a silicone resin composition. The silicone resin may be formed from a condensation type silicone resin composition or an UV-curable silicone resin composition, but is preferably formed from an addition type silicone resin composition. In the present embodiment, the separation functional layer 1 is preferably formed from an addition type silicone resin composition. The addition type silicone resin composition can be cured with little metal species (particularly tin) that can promote hydrolysis of the silicone resin. Therefore, the separation functional layer 1 including the silicone resin formed from the addition type silicone resin composition includes little metal species that can promote hydrolysis of the silicone resin, and is suitable for adjusting the above ratio R to a small value.

[Addition type silicone resin composition]

The addition type silicone resin composition is a silicone resin composition curable by an addition reaction. The addition type silicone resin composition includes, for example, a polyorganosiloxane P1 having an alkenyl group and a polyorganosiloxane P2 having a hydrosilyl (SiH) group. The addition type silicone resin composition preferably further includes a curing catalyst (hydrosilylation catalyst). The addition type silicone resin composition may be one produced by adding a curing catalyst to a commercially-available silicone resin composition. The addition type silicone resin composition may be free of a curing catalyst.

The silicone resin can be formed, for example, by subjecting the addition type silicone resin composition to a heating treatment by which a reaction (hydrosilylation reaction) between the alkenyl group in the polyorganosiloxane P1 and the hydrosilyl group in the polyorganosiloxane P2 proceeds. In this hydrosilylation reaction, the polyorganosiloxane P2 functions as a crosslinking agent.

The alkenyl group of the polyorganosiloxane P1 is, for example, a vinyl group or a hexenyl group. The number of alkenyl groups in the polyorganosiloxane P1 is, for example, two or more. The alkenyl group is located, for example, at a terminal of the polyorganosiloxane P1.

The polyorganosiloxane P1 is, for example, one formed by introducing an alkenyl group to a polyorganosiloxane, which is, for example, a polyalkylalkylsiloxane, such as polydimethylsiloxane, polydiethylsiloxane, or polymethylethylsiloxane; a polyalkylarylsiloxane; or poly(dimethylsiloxane-diethylsiloxane).

A weight-average molecular weight of the polyorganosiloxane P1 is, for example, 1,000 or more, and may be 10,000 or more, 100,000 or more, 200,000 or more, 300,000 or more, or even 400,000 or more. The larger the weight-average molecular weight of the polyorganosiloxane P1 is, the better separation properties the pervaporation membrane 10A is likely to have. The upper limit of the weight-average molecular weight of the polyorganosiloxane P1 is, for example, but not particularly limited to, 1,000,000.

The number of hydrosilyl groups in the polyorganosiloxane P2 is, for example, two or more. The hydrosilyl group may be located at a terminal of the polyorganosiloxane P2, or may be included in a main chain of the polyorganosiloxane P2.

Examples of the polyorganosiloxane P2 include polymethyl hydrogen siloxane, poly(dimethylsiloxane-methyl hydrogen siloxane), and hydrosilyl-terminated polydimethylsiloxane.

A weight-average molecular weight of the polyorganosiloxane P2 is, for example, 100 or more, and may be 10,000 or more. The upper limit of the weight-average molecular weight of the polyorganosiloxane P2 is, for example, but not particularly limited to, 1,000,000.

A weight ratio P2/P1 of the polyorganosiloxane P2 to the polyorganosiloxane P1 is, for example, 500 wt% or less, and may be 100 wt% or less, 50 wt% or less, 20 wt% or less, 10 wt% or less, or even 5 wt% or less. The lower limit of the weight ratio P2/P1 is, for example, 0.01 wt% or more.

The curing catalyst is, for example, a platinum-based catalyst. In other words, the addition type silicone resin composition may include a curing catalyst including platinum. Specific examples of the platinum-based catalyst include chloroplatinic acid, an olefin complex of platinum, and an olefin complex of chloroplatinic acid. As described above, the addition type silicone resin composition may be free of a curing catalyst.

The addition type silicone resin composition may include a compound from which a catalytically active species that catalyzes an addition reaction is produced by irradiation with an active energy ray, such as ultraviolet (UV). An addition reaction can proceed, for example, by UV irradiation of the addition type silicone resin composition including such a compound.

The addition type silicone resin composition may further include an organic solvent in addition to the above components. Examples of the organic solvent include: hydrocarbon solvents, such as cyclohexane, n-hexane, and n-heptane; aromatic solvents, such as toluene and xylene; ester solvents, such as ethyl acetate and methyl acetate; ketone solvents, such as acetone and methyl ethyl ketone; and alcohol solvents, such as methanol, ethanol, and butanol. One of these organic solvents may be used alone, or two or more of these organic solvents may be used in combination. The addition type silicone resin composition may be of a solvent-free type which is substantially free of a solvent, such as an organic solvent.

[Condensation type silicone resin composition]

The condensation type silicone resin composition is a silicone resin composition curable by a condensation reaction. The condensation type silicone resin composition includes, for example, a polyorganosiloxane P3 having a silanol (SiOH) group and a silane compound P4 having a functional group, such as an alkoxy group, an alkenyloxy group, an acyloxy group, an amino group, a ketoxime group, or an amide group. The condensation type silicone resin composition may further include a curing catalyst. However, a curing catalyst for the condensation type silicone resin composition commonly includes a metal species (particularly tin) that can promote hydrolysis of the silicone resin. Hence, in the present embodiment, the condensation type silicone resin composition is preferably free of a curing catalyst.

The silicone resin can be formed, for example, by subjecting the condensation type silicone resin composition to a heating treatment by which a reaction (condensation reaction) between the silanol group in the polyorganosiloxane P3 and the above functional group in the silane compound P4 proceeds. In this condensation reaction, the silane compound P4 functions as a crosslinking agent.

The number of silanol groups in the polyorganosiloxane P3 is, for example, two or more. The silanol group is located, for example, at a terminal of the polyorganosiloxane P3. An alkyl group, such as a methyl group or an ethyl group, a phenyl group, or the like may be introduced as a substituent of a side chain to the polyorganosiloxane P3.

The polyorganosiloxane P3 is, for example, one formed by introducing a silanol group to any of the polyorganosiloxanes described for the polyorganosiloxane P1.

A weight-average molecular weight of the polyorganosiloxane P3 is, for example, 1,000 or more, and may be 10,000 or more, 100,000 or more, 200,000 or more, 300,000 or more, or even 400,000 or more. The upper limit of the weight-average molecular weight of the polyorganosiloxane P3 is, for example, but not particularly limited to, 1,000,000.

As described above, the silane compound P4 has a functional group, such as an alkoxy group, an alkenyloxy group, an acyloxy group, an amino group, a ketoxime group, or an amide group. Examples of the alkoxy group include a methoxy group and an ethoxy group. Examples of the alkenyloxy group include an isopropenyloxy group. Examples of the acyloxy group include an acetoxy group. Examples of the amino group include a dimethylamino group, a diethylamino group, and an ethylmethylamino group. Examples of the ketoxime group include an acetoxime group and a methylethylketoxime group. Examples of the amide group include an acetamide group, an N-methylacetamide group, and an N-ethylacetamide group. The number of functional groups in the silane compound P4 is, for example, two or more. Specifically, the silane compound P4 preferably includes an alkoxysilyl group as the alkoxy group.

The silane compound P4 may be a low-molecular compound having a molecular weight of around 1000 or less, or may be a polymer compound having a polysiloxane framework.

The condensation type silicone resin composition may further include an organic solvent in addition to the above components. Examples of the organic solvent include those described above for the addition type silicone resin composition. The condensation type silicone resin composition may be of a solvent-free type which is free of a solvent, such as an organic solvent.

[UV-curable silicone resin composition]

The UV-curable silicone resin composition is a silicone resin composition curable by ultraviolet (UV) irradiation. A curing reaction of the UV-curable silicone resin composition proceeds, for example, through radical polymerization, radical addition, ionic polymerization, or the like. The UV-curable silicone resin composition whose curing reaction proceeds through radical polymerization includes, for example, a polyorganosiloxane P5 including a double bond (specifically a carbon-carbon double bond) in an alkenyl group, an acryloyl group, or the like. The UV-curable silicone resin composition whose curing reaction proceeds through radical addition includes, for example, the polyorganosiloxane P5 including a double bond (specifically a carbon-carbon double bond) in an alkenyl group, an acryloyl group, or the like and a compound P6 having a functional group, such as a thiol group, capable of radical addition. The UV-curable silicone resin composition whose curing reaction proceeds through ionic polymerization includes, for example, a polyorganosiloxane P7 having a functional group, such as an epoxy group, capable of ionic polymerization and a compound from which a catalytically active species that catalyzes ionic polymerization is produced by UV irradiation.

By UV irradiation of the UV-curable silicone resin composition whose curing reaction proceeds through radical polymerization, for example, a radical polymerization reaction proceeds between the double bonds each included in the alkenyl group, the acryloyl group, or the like in the polyorganosiloxane P5, and thereby the silicone resin can be formed.

The alkenyl group of the polyorganosiloxane P5 is, for example, a vinyl group or a hexenyl group. The number of alkenyl groups in the polyorganosiloxane P5 is, for example, two or more. The alkenyl group is located, for example, at a terminal of the polyorganosiloxane P5. An alkyl group, such as a methyl group or an ethyl group, a phenyl group, or the like may be introduced as a substituent of a side chain to the polyorganosiloxane P5.

The polyorganosiloxane P5 is, for example, one formed by introducing a substituent, such as an alkenyl group or an acryloyl group, including a double bond to any of the polyorganosiloxanes described for the polyorganosiloxane P1.

A weight-average molecular weight of the polyorganosiloxane P5 is, for example, 1,000 or more, and may be 10,000 or more, 100,000 or more, 200,000 or more, 300,000 or more, or even 400,000 or more. The upper limit of the weight-average molecular weight of the polyorganosiloxane P5 is, for example, but not particularly limited to, 1,000,000.

By UV irradiation of the UV-curable silicone resin composition whose curing reaction proceeds through radical polymerization, for example, radical addition of the functional group capable of radical addition and included in the compound P6 to the double bond included in the alkenyl group, the acryloyl group, or the like in the polyorganosiloxane P5 occurs. Thereby a radical addition reaction proceeds, and the silicone resin can be formed.

Examples of the functional group capable of radical addition and included in the compound P6 include a thiol group and an alkylthiol group. Examples of the alkylthiol group include a mercaptomethyl group and a mercaptoethyl group. The number of functional groups capable of radical addition and included in the compound P6 is, for example, two or more.

The compound P6 may be a polyorganosiloxane including the functional group capable of radical addition. The above functional group is located, for example, at a terminal of the polyorganosiloxane. An alkyl group, such as a methyl group or an ethyl group, a phenyl group, or the like may be introduced as a substituent of a side chain to the polyorganosiloxane.

The compound P6 is, for example, one formed by introducing a functional group, such as a thiol group, capable of radical addition to any of the polyorganosiloxanes described for the polyorganosiloxane P1.

A weight-average molecular weight of the compound P6 is, for example, 1,000 or more, and may be 10,000 or more, 100,000 or more, 200,000 or more, 300,000 or more, or even 400,000 or more. The upper limit of the weight-average molecular weight of the compound P6 is, for example, but not particularly limited to, 1,000,000.

By UV irradiation of the UV-curable silicone resin composition whose curing reaction proceeds through ionic polymerization, for example, a catalytically active species that catalyzes ionic polymerization is produced, and an ionic polymerization reaction proceeds between the functional groups each capable of ionic polymerization and included in the polyorganosiloxane P7. The silicone resin can be formed thereby.

Examples of the functional group capable of ionic polymerization and included in the polyorganosiloxane P7 include an epoxy group. Examples of a substituent including an epoxy group include an epoxy group itself, a glycidyl group, and a glycidyloxypropyl group. The number of functional groups capable of ionic polymerization and included in the polyorganosiloxane P7 is, for example, two or more. The functional group capable of ionic polymerization is located, for example, at a terminal of the polyorganosiloxane P7. An alkyl group, such as a methyl group or an ethyl group, a phenyl group, or the like may be introduced as a substituent of a side chain to the polyorganosiloxane P7.

The polyorganosiloxane P7 is, for example, one formed by introducing a functional group, such as an epoxy group, capable of ionic polymerization to any of the polyorganosiloxanes described for the polyorganosiloxane P1.

A weight-average molecular weight of the polyorganosiloxane P7 is, for example, 1,000 or more, and may be 10,000 or more, 100,000 or more, 200,000 or more, 300,000 or more, or even 400,000 or more. The upper limit of the weight-average molecular weight of the polyorganosiloxane P7 is, for example, but not particularly limited to, 1,000,000.

The UV-curable silicone resin composition may further include an organic solvent in addition to the above components. Examples of the organic solvent include: hydrocarbon solvents, such as cyclohexane, n-hexane, and n-heptane; aromatic solvents, such as toluene and xylene; ester solvents, such as ethyl acetate and methyl acetate; ketone solvents, such as acetone and methyl ethyl ketone; and alcohol solvents, such as methanol, ethanol, and butanol. One of these organic solvents may be used alone, or two or more of these organic solvents may be used in combination. The UV-curable silicone resin composition may be of a solvent-free type which is substantially free of a solvent, such as an organic solvent.

The separation functional layer 1 may include the silicone resin as its main component, or may be substantially composed only of the silicone resin. The term "main component" means a component having a largest content in the separation functional layer 1 by weight.

The separation functional layer 1 preferably has a low content of a metal species that can promote hydrolysis of the silicone resin. In particular, when the content of tin in the separation functional layer 1 is 1100 wt ppm or less, hydrolysis of the silicone resin scarcely proceeds upon contact of the separation functional layer 1 with water and the ratio R is easily adjusted to a high value.

In another aspect, the present invention provides the pervaporation membrane 10A including

the separation functional layer 1 including the silicone resin, wherein
the content of tin in the separation functional layer 1 is 1100 wt ppm or less.

The content of tin in the separation functional layer 1 is preferably 1000 wt ppm or less, and may be 800 wt ppm or less, 500 wt ppm or less, 300 wt ppm or less, 100 wt ppm or less, 80 wt ppm or less, 50 wt ppm or less, 30 wt ppm or less, 10 wt ppm or less, 5 wt ppm or less, or even 1 wt ppm or less. The separation functional layer 1 may be substantially free of tin. The content of a metal species, such as tin, can be measured, for example, by atomic absorption spectroscopy. The content of a metal species in the separation functional layer 1 can also be calculated from a content of the metal species in the material(s) for production of the separation functional layer 1.

A thickness of the separation functional layer 1 is, for example, 200 $\mu$m or less, and may be 100 $\mu$m or less, or even 80 $\mu$m or less. The thickness of the separation functional layer 1 may be 1.0 $\mu$m or more, 10 $\mu$m or more, or even 30 $\mu$m or more.

(Porous support)

The porous support 5 includes, for example, a main portion 6 and a fine porous layer 7 placed on the main portion 6. In the pervaporation membrane 10A, the fine porous layer 7 is positioned between the main portion 6 and the separation functional layer 1, and is in direct contact with both the main portion 6 and the separation functional layer 1. The porous support 5 is typically an ultrafiltration membrane.

The main portion 6 is, for example, a fibrous structure, such as a woven fabric or a non-woven fabric, and is typically a non-woven fabric. Examples of a fiber included in the fibrous structure include: natural fibers, such as wood pulp, cotton, and hemp (e.g., Manila hemp); and chemical fibers (synthetic fibers), such as polyester fiber, rayon, vinylon, acetate fiber, polyvinyl alcohol (PVA) fiber, polyamide fiber, polyolefin fiber, and polyurethane fiber. The main portion 6 is, for example, a non-woven fabric formed of polyester fiber. The main portion 6 has, for example, an average pore diameter of 1 $\mu$m to 50 $\mu$m.

Examples of the material of the fine porous layer 7 include fluorine resins, such as polyvinylidene fluoride and polytetrafluoroethylene; polyarylethersulfones, such as polysulfone and polyethersulfone; and polyimides. The fine porous layer 7 has, for example, an average pore diameter of 0.01 $\mu$m to 0.4 $\mu$m.

A thickness of the porous support 5 is, for example, but not particularly limited to, 10 $\mu$m or more, and may be 50 $\mu$m or more, or even 100 $\mu$m or more. The thickness of the porous support 5 is, for example, 300 $\mu$m or less, and may be 200 $\mu$m or less.

(Pervaporation membrane production method)

The pervaporation membrane 10A can be produced, for example, by forming the separation functional layer 1 on the fine porous layer 7 of the porous support 5. Specifically, first, a coating liquid containing a material of the separation functional layer 1 is prepared. The coating liquid is, for example, the silicone resin composition (the addition type silicone resin composition, the condensation type silicone resin composition, or the UV-curable silicone resin composition). Then, the coating liquid is applied to the porous support 5 to form a coating film. The coating film is cured to form the separation functional layer 1. The curing of the coating film can be performed at ordinary temperature or in a heated environment. The curing of the coating film can also be performed by irradiation with an active energy ray, such as UV.

In the case of curing the coating film by heating, conditions for heating the coating film are not limited to particular conditions. For example, the temperature at which the coating film is heated may be 80°C or higher, 90°C or higher, 100°C or higher, or even 120°C or higher. The higher the heating temperature for the coating film is, the more sufficiently a curing reaction of the components in the silicone resin composition proceeds. This tends to be able to inhibit the ratio R from significantly exceeding 0% due to Test 1 above. The upper limit of the heating temperature of the coating film is, for example, but not particularly limited to, 200°C. The heating time for the coating film can be adjusted as appropriate according to the composition of the silicone resin composition used.

(Application of pervaporation membrane)

A suitable application of the pervaporation membrane 10A of the present embodiment is, for example, to separate the volatile organic compound C from the aqueous solution S containing the organic compound C. The organic compound C is not limited to a particularly one as long as the organic compound C has volatility. An organic compound having volatility herein refers to, for example, an organic compound having a boiling point of 20°C to 260°C under the atmospheric pressure (101.325 kPa). Note that the organic compound C is, for example, one that, at high concentration in the solution, causes formation of an aqueous phase containing water as its main component and an organic phase having a higher content of organic compound C than that in the aqueous phase. The organic compound C may be one that does not cause formation of an aqueous phase and an organic phase.

The number of carbon atoms in the organic compound C is, for example, but not particularly limited to, 10 or less, and may be 8 or less, 6 or less, or even 4 or less. The lower limit of the number of carbon atoms in the organic compound C may be 1 or 2. The organic compound C has, for example, an oxygen-containing functional group, such as a hydroxyl group, a carbonyl group, an ether group, and an ester group. In the organic compound C, the number of oxygen-containing functional groups is typically one.

Examples of the organic compound C include an alcohol, a ketone, and an ester. The organic compound C is typically an alcohol. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol include methanol, ethanol, n-propanol, isopropanol, n-butanol, 2-butanol, isobutanol, t-butanol, and n-pentanol. Examples of the aryl alcohol include phenol.

The ketone may be a dialkyl ketone composed only of an alkyl group and a carbonyl group. Examples of the dialkyl ketone include methyl ethyl ketone (MEK) and acetone.

The ester may be an aliphatic alkyl ester composed only of an alkyl group and an ester group. Examples of the aliphatic alkyl ester include ethyl acetate.

The organic compound C is not limited to those mentioned above. The organic compound C may be an aromatic hydrocarbon, such as benzene, toluene, or xylene.

The aqueous solution S may contain one organic compound C, or two or more organic compounds C. The content of the organic compound C in the aqueous solution S is, for example, 0.5 wt% or more, and may be 1 wt% or more, 2 wt% or more, or even 5 wt% or more. The upper limit of the content of the organic compound C is, for example, but not particularly limited to, 50 wt%.

The organic compound C may be a fermented product generated by fermentation of a carbon source by a microorganism, or may be an alcohol (bioalcohol) generated by a microorganism. That is, the aqueous solution S may be a fermented solution containing the organic compound C as the fermented product. The aqueous solution S is not limited to the fermented solution and may be a waste solution or waste water discharged from a chemical plant or the like.

The aqueous solution S may further contain an additional component, such as the microorganism by which the fermented product is generated, the carbon source, a nitrogen source, and an inorganic ion, other than water and the organic compound C. The microorganism by which the fermented product is generated is typically a bacterium. Examples of the carbon source include polysaccharides, such as starch, and monosaccharides, such as glucose.

(Properties of pervaporation membrane)

A separation factor of the pervaporation membrane 10A for the organic compound C with respect to water is not limited to a particular one. In one example, a separation factor $\alpha 1_{BuOH}$ of the pervaporation membrane 10A for n-butanol (BuOH) with respect to water is, for example, 10 or more, and may be 15 or more, 20 or more, 25 or more, 30 or more, or even 40 or more. The upper limit of the separation factor $\alpha 1_{BuOH}$ is, for example, 100.

The separation factor $\alpha 1_{BuOH}$ can be measured by the following method. In a state where a liquid mixture consisting of BuOH and water is in contact with one surface (e.g., a principal surface 10a of the pervaporation membrane 10A on the separation functional layer side) of the pervaporation membrane 10A, a space adjacent to the other surface (e.g., a principal surface 10b of the pervaporation membrane 10A on the porous support side) of the pervaporation membrane 10A is decompressed to 15 hPa. A permeated fluid having permeated through the pervaporation membrane 10A is thus obtained. A weight ratio of water and a weight ratio of BuOH in the permeated fluid are measured. In the above process, a content of BuOH in the liquid mixture is 1.0 wt%. The liquid mixture in contact with the pervaporation membrane 10A has a temperature of 30°C. The space adjacent to the other surface of the pervaporation membrane 10A is decompressed to 15 hPa. The separation factor $\alpha 1_{BuOH}$ can be calculated by the following equation. In the following equation, XA and XB are respectively a weight ratio of BuOH and that of water in the liquid mixture. The symbols $Y_A$ and $Y_B$ are respectively the weight ratio of BuOH and that of water in the permeated fluid having permeated through the pervaporation membrane 10A.

$$\text{Separation factor } \alpha 1_{BuOH} = (Y_A/Y_B)/(X_A/X_B)$$

Under the above measurement conditions for the separation factor $\alpha 1_{BuOH}$, a flux of the BuOH having permeated through the pervaporation membrane 10A is, for example, but not particularly limited to, 0.01 $(g/min/m^2)$ to 10.0 $(g/min/m^2)$.

In the present embodiment, deterioration of the separation functional layer 1 tends to be reduced even after the separation functional layer 1 has been in contact with the aqueous solution S containing the volatile organic compound C for a long period of time. Therefore, the separation performance of the pervaporation membrane 10A is less likely to decrease even after the pervaporation membrane 10A has been in contact with the aqueous solution S for a long period of time. In one example, a ratio R1 of a value to the separation factor $\alpha 1_{BuOH}$ of the pervaporation membrane 10A before Test 2 below for BuOH with respect to water is -30% or more, the value being determined by subtracting the separation factor $\alpha 1_{BuOH}$ from a separation factor $\alpha 2_{BuOH}$ of the pervaporation membrane 10A after Test 2 for BuOH with respect to water.

Test 2: The pervaporation membrane 10A is immersed in a liquid mixture L consisting of n-butanol and water for three weeks. The pervaporation membrane 10A is taken out of the liquid mixture L and dried. A content of n-butanol in the liquid mixture L is 1.0 wt%, and the liquid mixture L has a temperature of 80°C.

The ratio R1 can be calculated specifically by the following equation (2).

$$\text{Ratio R1 (\%) } = 100 \times (\alpha 2_{BuOH} - \alpha 1_{BuOH})/\alpha 1_{BuOH} \quad (2)$$

The ratio R1 is preferably -25% or more, and may be -20% or more, -15% or more, -10% or more, or even -5% or more. The upper limit of the ratio R1 is, for example, 50% or less, and may be 40% or less, 30% or less, 20% or less, or even 10% or less.

The separation factor $\alpha 2_{BuOH}$ can be measured by the same method as for the separation factor $\alpha 1_{BuOH}$, except that the pervaporation membrane 10A after Test 2 is used. The separation factor $\alpha 2_{BuOH}$ is, for example, 10 or more, and may be 15 or more, 20 or more, 25 or more, 30 or more, or even 40 or more. The upper limit of the separation factor $\alpha 2_{BuOH}$ is, for example, 100.

Moreover, a separation factor $\alpha 1_{IPA}$ of the pervaporation membrane 10A for isopropanol (IPA) with respect to water is, for example, 5 or more, and may be 10 or more, or even 15 or more. The upper limit of the separation factor $\alpha 1_{IPA}$ is, for example, 100.

The separation factor $\alpha 1_{IPA}$ can be measured by the same method as for the separation factor $\alpha 1_{BuOH}$, except that a liquid mixture containing 5 wt% IPA is used.

Furthermore, in the present embodiment, a ratio R2 of a value to a separation factor $\alpha 1_{IPA}$ of the pervaporation membrane 10A before Test 2 above for IPA with respect to water is -30% or more, the value being determined by subtracting the separation factor $\alpha 1_{IPA}$ of the pervaporation membrane 10A from a separation factor $\alpha 2_{IPA}$ of the pervaporation membrane 10A after Test 2 for IPA with respect to water.

The ratio R2 can be calculated specifically by the following equation (3).

$$\text{Ratio R2 (\%) } = 100 \times (\alpha 2_{IPA} - \alpha 1_{IPA})/\alpha 1_{IPA} \quad (3)$$

The ratio R2 is preferably -25% or more, and may be -20% or more, -15% or more, -10% or more, or even -5% or more. The upper limit of the ratio R2 is, for example, 50% or less, and may be 40% or less, 30% or less, 20% or less, or even 10% or less.

The separation factor $\alpha 2_{IPA}$ can be measured by the same method as for the separation factor $\alpha 1_{IPA}$, except that the pervaporation membrane 10A after Test 2 is used. The separation factor $\alpha 2_{IPA}$ is, for example, 5 or more, and may be 10 or more, or even 15 or more. The upper limit of the separation factor $\alpha 2_{IPA}$ is, for example, 100.

<Modification of pervaporation membrane>

FIG. 2 is a cross-sectional view schematically showing a modification of the pervaporation membrane. As shown in FIG. 2, in a pervaporation membrane 10B, the separation functional layer 1 includes a matrix 2 including a silicone resin and a filler 3 dispersed in the matrix 2. Except the above, the configuration of the pervaporation membrane 10B is the same as that of the pervaporation membrane 10A. Therefore, elements common between the pervaporation membrane 10A and the pervaporation membrane 10B of Modification are denoted by the same reference characters, and the descriptions of such elements may be omitted. That is, the description of one embodiment is applicable to the other, unless there is technical inconsistency. The configurations of the embodiments may be combined with each other, unless there is technical inconsistency.

As described above, in the pervaporation membrane 10B, the separation functional layer 1 further includes the filler 3. All or a portion of particles of the filler 3 is embedded in the matrix 2. In the matrix 2, all particles of the filler 3 may be spaced from each other, or a portion of the particles of the filler 3 may aggregate.

Examples of the silicone resin included in the matrix 2 include those described for the pervaporation membrane 10A.

The filler 3 includes, for example, an inorganic material, such as zeolite, silica, or bentonite. The filler 3 includes, for example, at least one selected from the group consisting of zeolite and silica, and preferably includes silica. The filler 3 including silica tends to have higher resistance to hydrolysis than that of the filler 3 including zeolite. Moreover, in the case of the filler 3 including silica, the silicone resin included in the matrix 2 tends to have a higher free volume. The high free volume of the silicone resin tends to enhance the separation properties of the pervaporation membrane 10B, particularly, the separation factor $\alpha$ for BuOH with respect to water.

Silica commonly means silicon dioxide. The filler 3 may be a silica filler including silicon dioxide as its main component. The silica filler does not have, for example, a crystal structure. The silica filler can be produced, for example, by causing silicon metal to react with oxygen. The silica filler can also be produced by a sol-gel process, sedimentation, an aqueous solution wet method, or the like. The filler 3 may be substantially composed only of silicon dioxide.

Note that the filler 3 may include zeolite. Examples of the zeolite included in the filler 3 include a high-silica zeolite having a high ratio of silica to alumina and an alumina-free silicalite. As the filler 3 including a high-silica zeolite can be used HSZ (registered trademark) manufactured by Tosoh Corporation, HiSiv (registered trademark) manufactured by UNION SHOWA K.K., USKY manufactured by UNION SHOWA K.K., or Zeoal (registered trademark) manufactured by Nakamura Choukou Co., Ltd.

The filler 3, particularly the silica filler, is free of, for example, a micropore having a diameter of 2 nm or less. However, the filler 3 may have a mesopore having a diameter of 2 nm to 50 nm and a macropore having a diameter of 50 nm or more.

The filler 3, particularly the silica filler, preferably has a surface modified with a modifying group including a hydrocarbon group. In other words, the filler 3 is preferably surface-treated with a modifying group. The surface-modified filler 3 is highly dispersible in the silicone resin and is suitable for inhibiting occurrence of a crack, for example, in production of the separation functional layer 1.

The number of carbon atoms in the hydrocarbon group included in the modifying group is, for example, but not particularly limited to, 1 to 25. The number of carbon atoms in the hydrocarbon group may be 5 or less. The hydrocarbon group may be linear, branched, or cyclic. Examples of the hydrocarbon group include alkyl groups, such as a methyl group and an ethyl group.

The modifying group may further include a silicon atom, and the hydrocarbon group may be bonded to the silicon atom. The modifying group may include at least one selected from the group consisting of an organosilyl group and a polyorganosiloxane group. Examples of the organosilyl group include: triorganosilyl groups, such as a trimethylsilyl group; and diorganosilyl groups, such as a dimethylsilyl group. Examples of the polyorganosiloxane group include a dimethylpolysiloxane group.

The surface modification with the modifying group can be performed, for example, by a reaction between a hydroxyl group at the surface of the filler 3 and a known silane coupling agent.

Specific examples of the surface-modified silica filler include those manufactured by Nippon Aerosil Co., Ltd. under the product names of "AEROSIL (registered trademark) RX series" (RX 50, RX 200, RX 300, etc.), "AEROSIL (registered trademark) RY series" (RY 50, RY 200, RY 200 S, etc.), "AEROSIL (registered trademark) NY series" (NY 50, NY 50 L, etc.), "AEROSIL (registered trademark) NAX series" (NAX 50, etc.), and "AEROSIL (registered trademark) R series" (R 972, R 974, R 976, etc.).

The filler 3 is preferably sufficiently surface-modified with the modifying group in terms of dispersibility in the silicone resin. In other words, the number of hydroxyl groups on the surface of the filler 3 is preferably small. Whether the filler 3 is sufficiently surface-modified with the modifying group can be judged, for example, from the pH of a dispersion of the filler 3 or a Hansen solubility parameter (HSP value) of the filler 3. Incidentally, the Hansen solubility parameter is a solubility parameter resulting from division of the solubility parameter introduced by Hildebrand into three components, namely, a dispersion term δD, a polarity term δP, and a hydrogen bonding term δH. The details of the Hansen solubility parameter are disclosed in, for example, "Hansen Solubility Parameters; A Users Handbook (CRC Press, 2007)".

In the present embodiment, the pH measured by Test 3 below for a dispersion of the filler 3 is, for example, 4.0 to 9.0, and may be 6.0 to 8.0. The pH of the dispersion is preferably neutral (around pH 7.0). When the pH of the dispersion is neutral, it can be said that the filler 3 is sufficiently surface-modified with the modifying group and the number of hydroxyl groups on the surface is small. Test 3: Water, methanol, and the filler 3 are mixed to prepare a dispersion, and pH of the dispersion is measured. A content of the filler 3 in the dispersion is 4 wt%, a weight ratio between water and methanol in the dispersion is 1:1, and the dispersion has a temperature of 25°C.

The filler 3 has, for example, a particle shape. The term "particle shape" herein includes a spherical shape, an elliptical shape, a flake shape, and a fiber shape. The filler 3 may be powdery. An average particle diameter of the filler 3 is, for example, but not particularly limited to, 50 μm or less, and may be 20 μm or less, 10 μm or less, 1 μm or less, 500 nm or less, 100 nm or less, 50 nm or less, 30 nm or less, or even 20 nm or less. The separation functional layer 1 including the filler 3 having a small average particle diameter is likely to distribute a stress applied to the separation functional layer 1 and tends to have strong adhesion to the porous support 5. The lower limit of the average particle diameter of the filler 3 of the separation functional layer 1 is, for example, but not particularly limited to, 1 nm, and may be 5 nm.

The average particle diameter of the filler 3 can be determined, for example, by the following method. First, a cross-section of the separation functional layer 1 is observed using a transmission electron microscope. The area of one of the particles of the filler 3 in the resulting electron microscope image is calculated by image processing. The diameter of a circle having the same area as the calculated area is considered the particle diameter (the diameter of the particle) of the particle of the filler 3. The particle diameter was calculated for any number (at least 50) of the particles of the filler 3, and the average of the calculation values was considered the average particle diameter of the filler 3.

The content of the filler 3 in the separation functional layer 1 is, for example, 1 wt% or more, and may be 5 wt% or more, 10 wt% or more, 20 wt% or more, 30 wt% or more, or even 40 wt% or more. The upper limit of the content of the filler 3 in the separation functional layer 1 is, for example, but not particularly limited to, 70 wt% or less, and may be less than 50 wt%. When the content of the filler 3 is less than 50 wt%, it is likely that occurrence of a defect, such as a crack, can be sufficiently inhibited in production of the separation functional layer 1. A content of the matrix 2 in the separation functional layer 1 is, for example, but not particularly limited to, 30 wt% to 99 wt%, and may be 30 wt% to 90 wt%.

A surface area D1 of the filler 3 per weight of the matrix 2 is, for example, but not particularly limited to, 5 m$^2$/g or more, and may be 10 m$^2$/g or more, 20 m$^2$/g or more, 30 m$^2$/g or more, 40 m$^2$/g or more, or even 50 m$^2$/g or more. The upper limit of the surface area D1 is, for example, but not particularly limited to, 100 m$^2$/g or less. The surface area D1 can be calculated by the following equation using a BET specific surface area D2 (m$^2$/g) determined for the filler 3 by nitrogen gas adsorption, a weight W1 (g) of the matrix 2 included in the separation functional layer 1, and a weight W2 (g) of the filler 3 included in the separation functional layer 1.

$$D1 \ (m^2/g) = D2 \ (m^2/g) \times W2 \ (g)/W1 \ (g)$$

<Embodiment of membrane separation device>

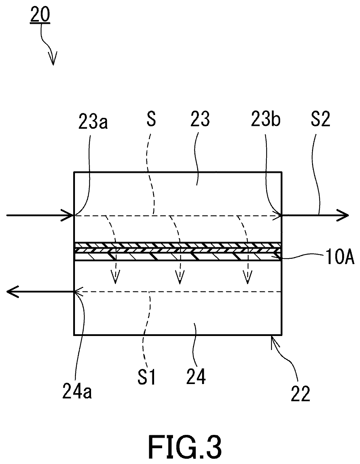

As shown in FIG. 3, a membrane separation device 20 of the present embodiment includes the pervaporation membrane 10A and a tank 22. The membrane separation device 20 may include the pervaporation membrane 10B described in FIG. 2 instead of the pervaporation membrane 10A. The tank 22 has a first chamber 23 and a second chamber 24. The first chamber 23 functions as a feed space to which a supplied fluid (specifically, the aqueous solution S described above) is supplied. The second chamber 24 functions as a permeation space to which a permeated fluid S1 is supplied. The permeated fluid S1 is obtained by allowing the aqueous solution S to permeate through the pervaporation membrane 10A.

The pervaporation membrane 10A is placed in the tank 22. In the tank 22, the pervaporation membrane 10A separates the first chamber 23 and the second chamber 24 from each other. The pervaporation membrane 10A extends from one of a pair of wall surfaces of the tank 22 to the other.

The first chamber 23 has an inlet 23a and an outlet 23b. The second chamber 24 has an outlet 24a. The inlet 23a is an opening for supplying the aqueous solution S to the feed space (the first chamber 23). The outlet 24a is an opening for discharging the permeated fluid S1 from the permeation space (the second chamber 24). The outlet 23b is an opening for discharging, from the feed space (the first chamber 23), the aqueous solution S (a non-permeated fluid S2) not having permeated through the pervaporation membrane 10A. The inlet 23a, the outlet 23b, and the outlet 24a are arranged, for example, in the wall surfaces of the tank 22.

The membrane separation device 20 is suitable for a flow-type (continuous-type) membrane separation method. However, the membrane separation device 20 may be used for a batch-type membrane separation method.

(Method for operating membrane separation device)

Operation of the membrane separation device 20 is performed, for example, by the following method. First, the aqueous solution S is supplied to the first chamber 23 of the membrane separation device 20 through the inlet 23a. This makes it possible to bring the aqueous solution S into contact with one surface (e.g., the principal surface 10a) of the pervaporation membrane 10A.

Next, in a state where the aqueous solution S is in contact with the one surface of the pervaporation membrane 10A, a space adjacent to the other surface (e.g., the principal surface 10b) of the pervaporation membrane 10A is decompressed. Specifically, the second chamber 24 is decompressed via the outlet 24a. The second chamber 24 can be decompressed, for example, by a decompression device, such as a vacuum pump. A pressure in the second chamber 24 is, for example, 50 kPa or less, and may be 20 kPa or less, 10 kPa or less, 5 kPa or less, 3 kPa or less, or even 2 kPa or less. The term "pressure" herein means absolute pressure unless otherwise noted.

By decompressing the second chamber 24, the permeated fluid S1 having a high content of the organic compound C can be obtained on the other surface side of the pervaporation membrane 10A. In other words, the permeated fluid S1 is supplied to the second chamber 24. In the second chamber 24, the permeated fluid S1 is typically a gas. The permeated fluid S1 is discharged outside the membrane separation device 20 through the outlet 24a.

On the other hand, the content of the organic compound C in the aqueous solution S gradually decreases from the inlet 23a of the first chamber 23 toward the outlet 23b thereof. The aqueous solution S (the non-permeated fluid S2) processed in the first chamber 23 is discharged outside the membrane separation device 20 through the outlet 23b. The non-permeated fluid S2 is typically a liquid.

As described above, the pervaporation membrane 10A is preferentially permeable to the organic compound C contained in the aqueous solution S. Therefore, the content of the organic compound C in the permeated fluid S1 obtained by the operation of the membrane separation device 20 is higher than that in the aqueous solution S to be supplied to the membrane separation device 20.

<Modification of membrane separation device>

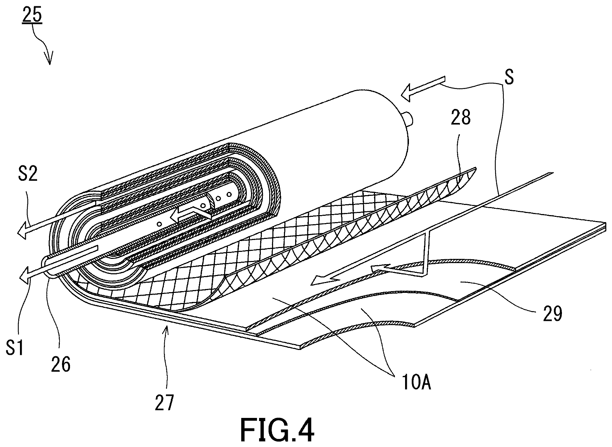

The membrane separation device 20 may be a spiral membrane element, a hollow fiber membrane element, a disk tube membrane element in which a plurality of pervaporation membranes are laminated, a plate-and-flame membrane element, or the like. FIG. 4 shows a spiral membrane element. A membrane separation device 25 of FIG. 4 includes a central tube 26 and a laminate 27. The laminate 27 includes the pervaporation membrane 10A (or the pervaporation membrane 10B).

The central tube 26 has a cylindrical tube shape. The central tube 26 has a surface with a plurality of holes or slits to allow the permeated fluid S1 to flow into the central tube 26. Examples of a material of the central tube 26 include: resins, such as an acrylonitrile-butadiene-styrene copolymer resin (an ABS resin), a polyphenylene ether resin (a PPE resin), or a polysulfone resin (a PSF resin); and metals, such as stainless steel or titanium. The central tube 26 has an inner diameter in a range of, for example, 20 to 100 mm.

The laminate 27 further includes a feed-side flow passage material 28 and a permeation-side flow passage material 29 in addition to the pervaporation membrane 10A. The laminate 27 is wound around the central tube 26. The membrane separation device 25 may be further provided with an exterior material (not shown).

As the feed-side flow passage material 28 and the permeation-side flow passage material 29 can be used, for example, a net, woven fabric, or knitted fabric formed of a resin, such as polyethylene, polypropylene, polyethylene terephthalate (PET), polyphenylene sulfide (PPS), or an ethylene-chlorotrifluoroethylene copolymer (ECTFE).

The membrane separation device 25 can be operated, for example, by the following method. First, the aqueous solution S is supplied to an end of the wound laminate 27. A space inside the central tube 26 is decompressed. The permeated fluid S1 having permeated through the pervaporation membrane 10A of the laminate 27 thereby moves into the central tube 26. The permeated fluid S1 is discharged outside through the central tube 26. The aqueous solution S (the non-permeated fluid S2) processed by the membrane separation device 25 is discharged outside from the other end of the wound laminate 27.

<Embodiment of membrane separation system>

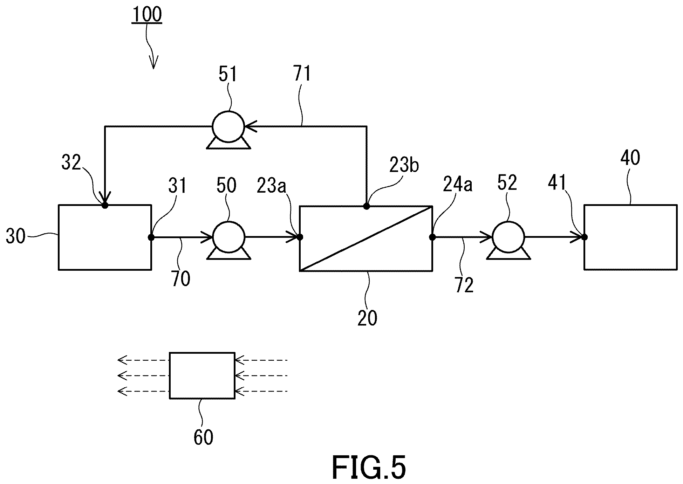

As shown in FIG. 5, a membrane separation system 100 of the present embodiment includes the membrane separation device 20 described above. The membrane separation system 100 may include the membrane separation device 25 described in FIG. 4 instead of the membrane separation device 20.

The membrane separation system 100 further includes a tank 30 in addition to the membrane separation device 20. The tank 30 stores the aqueous solution S to be supplied to the membrane separation device 20. The tank 30 may be a fermenter for generating the organic compound C by fermentation of a carbon source by a microorganism.

# EP 4 596 093 A1

The membrane separation system 100 further includes an aqueous solution feed passage 70, a non-permeated fluid discharge passage 71, and a permeated fluid discharge passage 72. The aqueous solution feed passage 70 is a passage for supplying the aqueous solution S from the tank 30 to the membrane separation device 20 during operation, and is connected to an outlet 31 of the tank 30 and the inlet 23a of the membrane separation device 20. The aqueous solution feed passage 70 is provided, for example, with a pump 50 that controls a flow rate of the aqueous solution S.

The non-permeated fluid discharge passage 71 is a passage for discharging the non-permeated fluid S2 from the membrane separation device 20 during operation, and is connected to the outlet 23b of the membrane separation device 20. The non-permeated fluid discharge passage 71 is provided, for example, with a pump 51 that controls a flow rate of the non-permeated fluid S2. Note that the non-permeated fluid discharge passage 71 may not be provided with the pump 51. The non-permeated fluid discharge passage 71 may be connected to an inlet 32 of the tank 30 and configured to supply the non-permeated fluid S2 to the tank 30 during operation. That is, the non-permeated fluid discharge passage 71 may be configured to allow the non-permeated fluid S2 to be mixed with the aqueous solution S in the tank 30 and to circulate through the aqueous solution feed passage 70 and the non-permeated fluid discharge passage 71. In the case where the non-permeated fluid S2 is supplied to the tank 30, the aqueous solution S and the non-permeated fluid S2 are mixed in the tank 30 to decrease the content of the organic compound C in the aqueous solution S. In the case where the tank 30 is a fermenter, a decrease in the content of the organic compound C in the aqueous solution S can inhibit fermentation by a microorganism from stopping, thereby making it possible to produce the fermented product continuously.

The permeated fluid discharge passage 72 is a passage for discharging the permeated fluid S1 from the membrane separation device 20 during operation, and is connected to the outlet 24a of the membrane separation device 20. The permeated fluid discharge passage 72 is provided, for example, with a decompression device 52. The decompression device 52 can decompress the permeation space of the membrane separation device 20. The decompression device 52 is preferably a vacuum device, such as a vacuum pump. The vacuum pump is typically a gas transport vacuum pump, and is, for example, a reciprocating vacuum pump, a rotary vacuum pump, or the like. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps, such as a roots dry pump, a claw dry pump, a screw dry pump, a turbo dry pump, and a scroll dry pump. The pump as the decompression device 52 may include a variable speed mechanism for changing the rotational speed, etc. An example of the variable speed mechanism is an inverter that drives a motor of the pump. By controlling the rotational speed, etc. of the pump by the variable speed mechanism, it is possible to adjust properly the pressure in the permeation space of the membrane separation device 20.

The permeated fluid discharge passage 72 may be further provided with a heat exchanger for cooling the permeated fluid S1. The heat exchanger can condense the permeated fluid S1 that is gaseous. The heat exchanger is, for example, a gas-liquid heat exchanger that causes heat exchange between a cooling medium, such as an antifreeze, and the permeated fluid S1 that is gaseous. The heat exchanger may be positioned between the membrane separation device 20 and the decompression device 52 (upstream of the decompression device 52), or between the decompression device 52 and a recovery unit 40 (downstream of the decompression device 52) described later.

The membrane separation system 100 further includes a recovery unit 40. The recovery unit 40 recovers the permeated fluid S1 from the membrane separation device 20 and can, for example, store the permeated fluid S1. The recovery unit 40 is, for example, a tank that stores the permeated fluid S1. The permeated fluid discharge passage 72 is connected to an inlet 41 of the recovery unit 40.

The membrane separation system 100 may further include a controller 60 that controls each member of the membrane separation system 100. The controller 60 is, for example, a digital signal processor (DSP) including an A/D conversion circuit, an input/output circuit, an arithmetic circuit, a storage device, etc. A program for operating properly the membrane separation system 100 is stored in the controller 60.

Each passage of the membrane separation system 100 is formed of, for example, a metal or resin pipe unless otherwise noted.

EXAMPLES

Hereinafter, the present invention will be described in more detail by way of examples and comparative examples, but the present invention is not limited to these examples.

(Example 1)

First, 54 g of toluene (manufactured by FUJIFILM Wako Pure Chemical Corporation; special grade) as a dilute solvent and 1 g of a platinum-based catalyst (CAT-PL-50T manufactured by Shin-Etsu Chemical Co., Ltd.) as a curing catalyst were added to 100 g of a silicone resin composition (KS-847T manufactured by Shin-Etsu Chemical Co., Ltd.; toluene solution; solids: 30 wt%) to produce a coating liquid (addition type silicone resin composition). The coating liquid

14

was applied to a porous support to form a coating film (thickness: 500 $\mu$m). As the porous support was used RS-50 (a laminate composed of a fine porous PVDF layer and a non-woven PET fabric) manufactured by Nitto Denko Corporation. The coating film was formed on the fine porous PVDF layer of the RS-50.

Subsequently, the coating film was cured by heating at 90°C for 20 minutes to produce a separation functional layer having a thickness of 50 $\mu$m. A pervaporation membrane of Example 1 was obtained in this manner.

(Examples 2 to 4)

Pervaporation membranes of Examples 2 to 4 were obtained in the same manner as in Example 1, except that silicone resin compositions shown in Table 1 below was used.

(Example 5)

A pervaporation membrane of Example 5 was obtained in the same manner as in Example 1, except that 50 g of a silicone resin composition (KE-1935B manufactured by Shin-Etsu Chemical Co., Ltd.) was added to 50 g of a silicone resin composition (KE-1935A manufactured by Shin-Etsu Chemical Co., Ltd.) to give a coating liquid (addition type silicone resin composition), that the thickness of the coating film was changed to 70 $\mu$m, and that the temperature for curing the coating film was changed to 150°C.

(Example 6)

A pervaporation membrane of Example 6 was obtained in the same manner as in Example 1, except that 62 g of toluene (manufactured by **FUJIFILM** Wako Pure Chemical Corporation; special grade) as a dilute solvent and 3 g of a tin-based catalyst (YC6831 manufactured by Momentive Performance Materials Japan LLC.) as a curing catalyst were added to 100 g of a silicone resin composition (YSR3022 manufactured by Momentive Performance Materials Japan LLC.) to produce a coating liquid (condensation type silicone resin composition).

(Example 7)

First, 46.5 g of toluene (manufactured by **FUJIFILM** Wako Pure Chemical Corporation; special grade) as a dilute solvent and 1.5 g of a curing agent (SILPOT 184 manufactured by Dow Corning Toray Co., Ltd.) were added to 15 g of a silicone resin composition (SILPOT 184 manufactured by Dow Corning Toray Co., Ltd.) to produce a coating liquid (addition type silicone resin composition). The coating liquid was applied to a porous support (RS-50 manufactured by Nitto Denko Corporation) but penetrated the porous support, and therefore production of a pervaporation membrane failed.

(Example 8)

First, 46 g of toluene (manufactured by **FUJIFILM** Wako Pure Chemical Corporation; special grade) as a dilute solvent, 0.73 g of a curing agent (SILPOT 184 manufactured by Dow Corning Toray Co., Ltd.), and 8 g of a zeolite filler (HSZ-890 manufactured by Tosoh Corporation) were added to 7.27 g of a silicone resin composition (SILPOT 184 manufactured by Dow Corning Toray Co., Ltd.) to produce a coating liquid (addition type silicone resin composition). The coating liquid was applied to a porous support (RS-50 manufactured by Nitto Denko Corporation) but penetrated the porous support, and therefore production of a pervaporation membrane failed.

(Example 9)

First, 8 g of a zeolite filler (HSZ-890 manufactured by Tosoh Corporation) and 10 g of toluene (manufactured by **FUJIFILM** Wako Pure Chemical Corporation; special grade) were added to 2.4 g of a silicone rubber macromer (DMS-S12 manufactured by Gelest Inc.), followed by stirring. To the resulting solution were added 36 g of toluene (manufactured by **FUJIFILM** Wako Pure Chemical Corporation; special grade), 5.09 g of a silicone resin composition (SILPOT 184 manufactured by Dow Corning Toray Co., Ltd.), and 0.51 g of a curing agent (SILPOT 184 manufactured by Dow Corning Toray Co., Ltd.) to produce a coating liquid (addition type silicone resin composition). The coating liquid was applied to a porous support (RS-50 manufactured by Nitto Denko Corporation) but penetrated the porous support, and therefore production of a pervaporation membrane failed.

(Example 10)

A pervaporation membrane of Example 10 was obtained in the same manner as in Example 1, except that 15 g of a silica filler (AEROSIL RX 50 manufactured by Nippon Aerosil Co., Ltd.), 87 g of toluene (manufactured by **FUJIFILM** Wako Pure Chemical Corporation; special grade) as a dilute solvent, and 0.5 g of a platinum-based catalyst (CAT-PL-50T manufactured by Shin-Etsu Chemical Co., Ltd.) as a curing catalyst were added to 50 g of a silicone resin composition (KS-847T manufactured by Shin-Etsu Chemical Co., Ltd.; toluene solution; solids: 30 wt%) to produce a coating liquid (addition type silicone resin composition).

(Example 11)

A pervaporation membrane of Example 11 was obtained in the same manner as in Example 1, except that the tin-based catalyst (YC6831 manufactured by Momentive Performance Materials Japan LLC.) was added to the coating liquid so that the content of tin in the separation functional layer would be 500 wt ppm.

(Examples 12 to 13)

Pervaporation membranes of Examples 12 and 13 were obtained in the same manner as in Example 11, except that the amount of the tin-based catalyst was adjusted so that the content of tin in the separation functional layer would be values shown in Table 1.

[Content of tin]

The weight of tin included in the separation functional layer was calculated from the content of tin in the materials for production of the separation functional layer, and the content of tin in the separation functional layer was calculated from the resulting calculation value. Note that the above weight of tin is determined by subtracting water, the organic solvent, and the like that volatilize during curing from the materials for production of the separation functional layer.

[Young's modulus]

First, a layer having the same composition and the same thickness as those of the separation functional layer included in each of the pervaporation membranes of Examples 1 to 6 and 10 to 13 was formed on a release liner. A release-treated polyethylene terephthalate (PET) film (MRE38 manufactured by Mitsubishi Chemical Corporation) was used as the release liner. The above layer was formed on a release-treated surface of the release liner. Then, the release liner was removed to produce a free-standing membrane of the separation functional layer. This free-standing membrane was measured for the Young's moduli A1 and A2 by the above methods. Furthermore, the ratio R was calculated from the Young's moduli A1 and A2 by the above equation (1). For the measurement of the Young's moduli A1 and A2, Autograph AGS-50NX manufactured by Shimadzu Corporation was used as a tensile tester.

[PV properties]

The separation factor $\alpha 1_{BuOH}$ of the pervaporation membrane before Test 2 for BuOH with respect to water, the separation factor $\alpha 2_{BuOH}$ of the pervaporation membrane after Test 2 for BuOH with respect to water, and the ratio R1 were determined for Examples 1, 6, and 10 to 13 by the above methods. Furthermore, the separation factor $\alpha 1_{IPA}$ of the pervaporation membrane before Test 2 for IPA with respect to water, the separation factor $\alpha 2_{IPA}$ of the pervaporation membrane after Test 2 for IPA with respect to water, and the ratio R2 were determined for Examples 2, 4, and 6 by the above methods.

[Tack evaluation]

Tack evaluation was performed for the pervaporation membranes of Examples 1 to 6 and 10 to 13 after Test 2 above. The tack evaluation was performed as follows. One finger was placed on the surface of the separation functional layer of the pervaporation membrane, kept still for one second, and then lifted. When a finger mark was left on the separation functional layer after lifting the finger, the pervaporation membrane was judged tacky. When a finger mark was not left on the separation functional layer after lifting the finger, the pervaporation membrane was judged tack-free.

[Crack evaluation]

For the pervaporation membranes of Examples 1 to 6 and 10 to 13 after Test 2 above, the surfaces of the separation functional layers of were visually examined for a crack.

[Table 1]

| | Silicone resin composition | Curing reaction | Curing catalyst | | Polyorganosiloxane in silicone resin composition | | Filler | Content of tin [wt ppm] | Young's modulus A1 [MPa] | Young's modulus A2 [MPa] | Ratio R [%] (*1) |
|---|---|---|---|---|---|---|---|---|---|---|---|
| | | | | | Weight-average molecular weight | Substituent | | | | | |
| Ex. 1 | KS847T | Addition | Platinum-based | CAT-PL-50T | 470,000 | Methyl | N/A | 0 | 0.73 | 0.93 | 27 |
| Ex. 2 | KS847 | Addition | Platinum-based | CAT-PL-50T | 340,000 | Methyl | N/A | 0 | 0.77 | 0.84 | 9 |
| Ex. 3 | KS3601 | Addition | Platinum-based | CAT-PL-50T | 399,000 | Methyl | N/A | 0 | 11.47 | 11.87 | 3 |
| Ex. 4 | KS3650 | Addition | Platinum-based | CAT-PL-50T | 353,000 | Methyl | N/A | 0 | 6.82 | 6.85 | 0 |
| Ex. 5 | KE1935 | Addition | N/A | N/A | 97,500 | Methyl | N/A | 0 | 0.86 | 0.82 | -5 |
| Ex. 6 | YSR3022 | Condensation | Tin-based | YC6831 | 452,000 | Methyl | N/A | 9130 | 3.95 | 0.46 | -88 |
| Ex. 7 | SILPOT184 | Addition | N/A | N/A | 38,900 | Methyl | N/A | - | - | - | - |
| Ex. 8 | SILPOT184 | Addition | N/A | N/A | 38,900 | Methyl | HSZ-890 | - | - | - | - |
| Ex. 9 | SILPOT184 | Addition | N/A | N/A | 38,900 | Methyl | HSZ-890 | - | - | - | - |
| Ex. 10 | KS847T | Addition | Platinum-based | CAT-PL-50T | 470,000 | Methyl | RX50 | 0 | 4.94 | 5.21 | 5 |
| Ex. 11 | KS847T | Addition | Platinum-based | CAT-PL-50T | 470,000 | Methyl | N/A | 500 | 0.62 | 0.53 | -15 |
| Ex. 12 | KS847T | Addition | Platinum-based | CAT-PL-50T | 470,000 | Methyl | N/A | 1000 | 0.35 | 0.27 | -23 |
| Ex. 13 | KS847T | Addition | Platinum-based | CAT-PL-50T | 470,000 | Methyl | N/A | 1500 | 0.29 | 0.17 | -41 |

(*1) Ratio R (%) = 100 × (A2 − A1)/A1

[Table 2]

| | PV properties | | | | | | Tack evaluation | Crack evaluation |
|---|---|---|---|---|---|---|---|---|
| | Separation factor $\alpha1_{BuOH}$ | Separation factor $\alpha2_{BuOH}$ | Ratio R1 [%] (*1) | Separation factor $\alpha1_{IPA}$ | Separation factor $\alpha2_{IPA}$ | Ratio R2 [%] (*2) | | |
| Ex. 1 | 20.2 | 20.1 | -0.5 | - | - | - | Tack-free | No cracks |
| Ex. 2 | - | - | - | 10.4 | 12.0 | 15 | Tack-free | No cracks |
| Ex. 3 | - | - | - | - | - | - | Tack-free | No cracks |
| Ex. 4 | - | - | - | 9.3 | 11.2 | 23 | Tack-free | No cracks |
| Ex. 5 | - | - | - | - | - | - | Tack-free | No cracks |
| Ex. 6 | 22.2 | 1 | -95 | 15.8 | 1 | -94 | Tacky | Cracked |
| Ex. 10 | 32.2 | 30.2 | -6 | - | - | - | Tack-free | No cracks |
| Ex. 11 | 24.2 | 24.5 | 1 | - | - | - | Tack-free | No cracks |
| Ex. 12 | 22.6 | 20.3 | -10 | - | - | - | Tack-free | No cracks |
| Ex. 13 | 20.9 | 11.4 | -45 | - | - | - | <u>Tacky</u> | Cracked |

(*1) Ratio R1 (%) = 100 × ($\alpha2_{BuOH}$ − $\alpha1_{BuOH}$)/$\alpha1_{BuOH}$

(*2) Ratio R2 (%) = 100 × ($\alpha2_{IPA}$ − $\alpha1_{IPA}$)/$\alpha1_{IPA}$

See below for the abbreviations in Table 1.

KS847T: Silicone resin composition (KS-847T manufactured by Shin-Etsu Chemical Co., Ltd.)
KS847: Silicone resin composition (KS-847 manufactured by Shin-Etsu Chemical Co., Ltd.)
KS3601: Silicone resin composition (KS-3601 manufactured by Shin-Etsu Chemical Co., Ltd.)
KS3650: Silicone resin composition (KS-3650 manufactured by Shin-Etsu Chemical Co., Ltd.)
KE1935: Silicone resin composition (KE-1935 manufactured by Shin-Etsu Chemical Co., Ltd.)
YSR3022: Silicone resin composition (YSR3022 manufactured by Momentive Performance Materials Japan LLC.)
SILPOT184:silicone resin composition (SILPOT 184 manufactured by Dow Corning Toray Co., Ltd.)
CAT-PL-50T: Platinum-based catalyst (CAT-PL-50T manufactured by Shin-Etsu Chemical Co., Ltd.)
YC6831: Tin-based catalyst (YC6831 manufactured by Momentive Performance Materials Japan LLC.)
HSZ-890: Zeolite filler (HSZ-890 manufactured by Tosoh Corporation)
RX50: Silica filler (AEROSIL RX 50 manufactured by Nippon Aerosil Co., Ltd.; surface modifying group: trimethylsilyl (TMS) group)

For the pervaporation membranes including the separation functional layers having a ratio R of -30% or more (Examples 1 to 5 and 10 to 12), even after the immersion in the liquid mixture L at 80°C for three weeks, the results for the tack evaluation and the crack evaluation were good, and deterioration of the separation functional layers was unable to be confirmed. In particular, for Examples 1, 2, 4, and 10 to 12, the PV properties scarcely decreased. On the other hand, for the pervaporation membranes including the separation functional layers having a ratio R of less than -30% (Examples 6 and 13), the immersion in the liquid mixture L at 80°C for three weeks resulted in development of tack and formation of a crack, and deterioration of the separation functional layers was confirmed. Furthermore, for Examples 6 and 13, the PV properties greatly decreased. From the above results, it is inferred that deterioration of the pervaporation membranes of Examples 1 to 5 and 10 to 12 is sufficiently reduced after a process for separating a volatile organic compound from an aqueous solution containing the organic compound is performed for a long period of time and that the pervaporation membranes of Examples 1 to 5 and 10 to 12 are suitable for use in such an application. Additionally, according to Table 1, the ratio R is likely to be -30% or more when the content of tin in the separation functional layer is 1100 wt ppm or less.
INDUSTRIAL APPLICABILITY

The pervaporation membrane of the present embodiment is suitable for separating a volatile organic compound from an aqueous solution containing the organic compound.

**Claims**

1. A pervaporation membrane comprising a separation functional layer including a silicone resin, wherein

   a ratio R of a value to a Young's modulus A1 (MPa) of the separation functional layer before a test below is -30% or more, the value being determined by subtracting the Young's modulus A1 from a Young's modulus A2 (MPa) of the separation functional layer after the test.
   Test: The separation functional layer is immersed in a liquid mixture consisting of n-butanol and water for three weeks. The separation functional layer is taken out of the liquid mixture and dried. A content of n-butanol in the liquid mixture is 1.0 wt%, and the liquid mixture has a temperature of 80°C.

2. The pervaporation membrane according to claim 1, wherein the ratio R is 30% or less.

3. The pervaporation membrane according to claim 1, wherein the Young's modulus A1 is 0.1 MPa or more.

4. The pervaporation membrane according to claim 1, wherein a content of tin in the separation functional layer is 1100 wt ppm or less.

5. A pervaporation membrane comprising a separation functional layer including a silicone resin, wherein a content of tin in the separation functional layer is 1100 wt ppm or less.

6. The pervaporation membrane according to claim 1 or 5, wherein the silicone resin is formed from an addition type silicone resin composition.

7. The pervaporation membrane according to claim 6, wherein the addition type silicone resin composition includes a polyorganosiloxane P1 including an alkenyl group and a polyorganosiloxane P2 including a hydrosilyl group.

8. The pervaporation membrane according to claim 6, wherein the addition type silicone resin composition includes a curing catalyst including platinum.

9. The pervaporation membrane according to claim 1 or 5, wherein the separation functional layer further includes a filler.

10. The pervaporation membrane according to claim 9, wherein the filler includes at least one selected from the group consisting of zeolite and silica.

11. The pervaporation membrane according to claim 9, wherein the filler has a surface modified with a modifying group including a hydrocarbon group.

12. The pervaporation membrane according to claim 11, wherein the modifying group includes at least one selected from the group consisting of an organosilyl group and a polyorganosiloxane group.

13. The pervaporation membrane according to claim 1 or 5 configured to be used to separate a volatile organic compound from an aqueous solution containing the organic compound.

14. The pervaporation membrane according to claim 13, wherein the organic compound is a fermented product generated by a microorganism.

EP 4 596 093 A1

FIG.1

FIG.2

22

FIG.3

FIG.4

FIG.5

## INTERNATIONAL SEARCH REPORT

| International application No. |
|---|
| **PCT/JP2023/032764** |

| A. | CLASSIFICATION OF SUBJECT MATTER |
|---|---|

***B01D 65/10***(2006.01)i; ***B01D 69/02***(2006.01)i; ***B01D 69/12***(2006.01)i; ***B01D 71/02***(2006.01)i; ***B01D 71/70***(2006.01)i
FI:  B01D71/70; B01D69/02; B01D71/02; B01D65/10; B01D69/12

According to International Patent Classification (IPC) or to both national classification and IPC

| B. | FIELDS SEARCHED |
|---|---|

Minimum documentation searched (classification system followed by classification symbols)

B01D53/22; B01D61/00-71/82; C02F1/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 4-45829 A (SHIN-ETSU POLYMER CO., LTD.) 14 February 1992 (1992-02-14) claims, p. 1, left column, line 16 to right column, line 1, p. 2, upper right column, line 15 to p. 4, upper right column, line 5, examples | 1-13 |
| Y | claims, p. 1, left column, line 16 to right column, line 1, p. 2, upper right column, line 15 to p. 4, upper right column, line 5, examples | 7-12, 14 |
| A | JP 2018-53229 A (SUMITOMO CHEMICAL CO., LTD.) 05 April 2018 (2018-04-05) claims, paragraphs [0039], [0040] | 1-14 |
| A | JP 2006-291078 A (KONOSHIMA CHEMICAL CO., LTD.) 26 October 2006 (2006-10-26) paragraph [0035] | 1-14 |
| X | JP 63-116705 A (GFT GESELLSCHAFT FUER EMISSIONS TECHNOLOGIE MBH) 21 May 1988 (1988-05-21) claims, p. 3, lower left column to p. 5, lower right column, examples | 1-6, 9-10, 13-14 |
| Y | claims, p. 3, lower left column to p. 5, lower right column, examples | 7-8, 11-12, 14 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2023** | **21 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2023/032764**

### C. DOCUMENTS CONSIDERED TO BE RELEVANT

| Category* | Citation of document, with indication, where appropriate, of the relevant passages | Relevant to claim No. |
|---|---|---|
| X | JP 57-136905 A (KURARAY CO., LTD.) 24 August 1982 (1982-08-24)<br>claims, p. 2, upper left column to p. 4, upper left column, examples | 1-6, 13 |
| Y | claims, p. 2, upper left column to p. 4, upper left column, examples | 7-12, 14 |
| A | JP 2011-183378 A (RESEARCH INSTITUTE OF INNOVATIVE TECHNOLOGY FOR THE EARTH) 22 September 2011 (2011-09-22)<br>claims | 1-14 |

Form PCT/ISA/210 (second sheet) (January 2015)

**INTERNATIONAL SEARCH REPORT**
Information on patent family members

International application No.

**PCT/JP2023/032764**

| Patent document cited in search report | | | Publication date (day/month/year) | Patent family member(s) | Publication date (day/month/year) |
|---|---|---|---|---|---|
| JP | 4-45829 | A | 14 February 1992 | (Family: none) | |
| JP | 2018-53229 | A | 05 April 2018 | (Family: none) | |
| JP | 2006-291078 | A | 26 October 2006 | (Family: none) | |
| JP | 63-116705 | A | 21 May 1988 | US 4925562 A claims, column 2, line 60 to column 5, line 65, examples EP 254758 A1 | |
| JP | 57-136905 | A | 24 August 1982 | (Family: none) | |
| JP | 2011-183378 | A | 22 September 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4899122 B

**Non-patent literature cited in the description**

- Hansen Solubility Parameters; A Users Handbook. CRC Press, 2007